(19) Europäisches Patentamt

European Patent Office

Office européen des brevets

(11) Veröffentlichungsnummer: **0 302 252 B1**

(12) **EUROPÄISCHE PATENTSCHRIFT**

(45) Veröffentlichungstag der Patentschrift: **04.03.92**

(21) Anmeldenummer: **88110831.0**

(22) Anmeldetag: **07.07.88**

(51) Int. Cl.⁵: **B01D 39/20**, C23C 26/00, F01N 3/02

(54) **Filter für kleine Partikel.**

(30) Priorität: **06.08.87 DE 3726076**

(43) Veröffentlichungstag der Anmeldung:
**08.02.89 Patentblatt 89/06**

(45) Bekanntmachung des Hinweises auf die
Patenterteilung:
**04.03.92 Patentblatt 92/10**

(84) Benannte Vertragsstaaten:
**BE CH DE ES FR GB LI NL SE**

(56) Entgegenhaltungen:
**DE-A- 3 041 961          DE-A- 3 131 195**
**DE-C- 329 061            DE-C- 3 153 601**
**FR-A- 645 895            GB-A- 634 217**
**US-A- 4 404 007          US-A- 4 588 449**

(73) Patentinhaber: **Thyssen Edelstahlwerke AG
August-Thyssen-Strasse 1
W-4000 Düsseldorf(DE)**

(72) Erfinder: **Behr, Friedrich, Dr.-Ing.
Espenweg 19
W-4150 Krefeld(DE)**

**Beschreibung**

Die Erfindung betrifft einen Filterkörper, der Poren aufweist, zum Filtrieren von Festkörperpartikeln mit Durchmessern, die kleiner als ca. 5 $\mu$m sind, aus strömenden Gasen oder Flüssigkeiten, und ein Verfahren zu seiner Herstellung. Bevorzugte Anwendungen sind die Entstaubung der Abgase von Verbrennungsanlagen, Verbrennungskraftmaschinen sowie die Reinigung von Abgasen und Flüssigkeiten der chemischen und pharmazeutischen Industrie.

Es ist bekannt, daß die Filtrierung von Feinststäuben einer Partikelgröße von unter 5 $\mu$m, insbesondere Ruß von Dieselmotoren mit einer Korngröße von unter 0,5 $\mu$m und feinen Partikeln in Aufschlämmungen, besondere technische Schwierigkeiten bereitet. Beispielsweise wird heute versucht, mit Hilfe von porösen keramischen Wabenkörpern mit einer nachteiligen hohen Wärmekapazität nach Art von Katalysatorträgern, bei denen jeder zweite Kanal an der Stirnfläche einseitig verschlossen wurde, den Ruß von Dieselmotoren zu filtrieren. Der Ruß als Filtrat wird dann mit Hilfe einer Zusatzbeheizung alternierend verbrannt, sobald der Druckverlust des Filters mehrere hundert Millibar beträgt.

Aus der US-A-2 061 370 ist bekannt, daß geringe Anteile an Seltenen Erden in ferritischen Heizleiterlegierungen einen günstigen Einfluß auf die Oxidationsbeständigkeit, besonders auf die Haftfestigkeit der Oxidschichten, ausüben. Gleiches gilt für die Elemente Yttrium, Titan und Zirkonium als Legierungszusätze. Mit Hilfe einer zweistufigen Oxidation werden aus solchen Legierungen Aluminiumoxid-Stengelkristalle (Whisker) gezüchtet (GB-A-2 081 747). Als Verwendung der Aluminiumoxide-Whisker-Folien wird die Herstellung von Katalysator-Wabenkörpern angeben, wobei die Whisker zur Vergrößerung der haftenden Oberfläche und zur Erhöhung der Haftfestigkeit weiterer Beschichtungen aus keramischen Pulvern dienen (Wash-Coat). Von der Anwendung derartiger Legierungen für Filter-Zwecke ist dieser Schrift nichts zu entnehmen.

Es ist nun Aufgabe der im Anspruch 1 angegebenen Erfindung, einen Körper aus möglichst dünnwandigem Material, um Druckverlust und Gewicht klein zu halten, zu schaffen, der in der Lage ist, feine und feinste Partikel, wie Aerosole oder Ruß mit Partikeldurchmessern von kleiner als 5 $\mu$m auch aus heißen Abgasen, bei denen häufig starke Temperaturschwankungen auftreten, zu filtern. Dabei soll der Filter eine wesentlich kleinere Wärmekapazität aufweisen, als bekannte keramische Wabenkörper.

Dieser Filterkörper wird erfindungsgemäß durch ein Verfahren hergestellt, bei dem auf einem Körper aus Stahlfolie mit Poren eine Deckschicht mit stengel- und/oder plättchenförmigen Oxiden zum mindesten in und um die Poren gebildet wird. Der nach dem erfindungsgemäßen Verfahren gebildete Filterkörper besteht also aus einer oder mehreren Stahlfolien, die Poren aufweisen.

Der metallische Werkstoff wird zumindest in der Umgebung der Poren möglichst aber auf der gesamten Folienfläche von einer Oxidschicht abgedeckt. In oder an der deckenden Oxidschicht sind stengelförmige und/oder plättchenförmige Oxide mit einer ihrer Stirnseiten befestigt.

Mit Hilfe einer Oxidation ist stengel- und/oder plättchenförmiges Oxid aus metallischem Material heraus erzeugbar, wobei genügend kleine Abstände zwischen den Stengeln und/oder Plättchen zum Filtrieren entstehen. Die Stengel- und/oder Plättchenoxide sind geeignet, "Poren", d.h. Risse, Anschnitte und/oder Löcher in der Stahlfolie, die etwa 10 $\mu$m breit sind, so auszufüllen, daß Abstände zwischen ihnen von ca. 0,1 bis 0,5 $\mu$m verbleiben. Die stengel- und/oder plättchenförmigen Oxide sind mit einer die Metallfolie abdeckenden schützenden Oxidschicht fest verbunden.

Bei hohen Temperaturen, verbunden mit hohen Temperaturwechselbeanspruchungen, platzen bekanntlich selbst die deckenden Oxidschichten von Heizleiterwerkstoffen teilweise plattenförmig ab. Dabei gehen auch die damit verbundenen Stengel- und Plättchenoxide verloren. Im Fall der Anwendung der Erfindung als Filter, z.B. Rußfilter sind diese Temperaturwechsel besonders stark. Innerhalb von Sekunden steigt die Temperatur im Bereich der Poren der Folien durch Zündung und Verbrennung des Ruß-Filtrates von ca. 350 $^\circ$C auf ca. 1000 $^\circ$C.

Es wurde gefunden, daß die Ränder etwa 10 $\mu$m breiter Poren so von der deckenden Oxidschicht eingehüllt werden können, daß sich bei schneller Erwärmung des Körpers der Oxid-Rand teilweise oder ganz, aber in sich zusammenhängend, vom Folienmetall löst. Auf diese Weise bleibt die Oxidschicht mit den daran festhaftenden Stengel- und Plättchenoxiden in der Pore formschlüssig erhalten.

Die Stengeloxide besthen hier primär aus Gamma-Aluminiumoxid. Erst nach einer Erwärmung auf über 980 $^\circ$C entstehen daraus Alpha-Aluminiumoxid-Stengel. Die Poren der Folie können mit mechanischen Methoden, wie die korrosive thermische Oxidation in Gegenwart von Chlorid, oder anderen bekannten Maßnahmen, wie der Beschuß mit Lasern oder dem Elektronenstrahl, erzeugt werden.

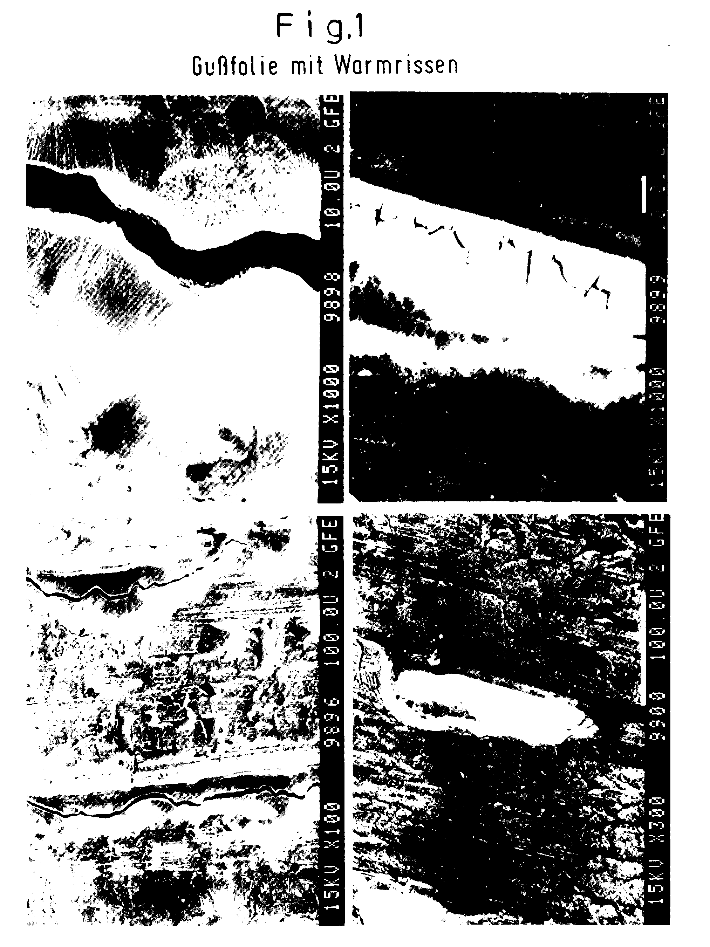

Eine besonders günstige Methode wurde nun gefunden, indem der Werkstoff auf einer Rolle nach Art der Herstellung amorpher Metallbänder -an und für sich "fehlerbehaftet"-zur Folie vergossen wird. Bei genügender Rauheit einer Rolle aus z. B. Kupfer oder Stahl bilden sich Warmrisse in der Folie. Die Rißbreiten und die Rißhäufigkeit läßt sich über die Rauhtiefe der Rolle und die Foliendicke (Düsenspaltbreite, Breite des Spaltes zwischen der Düse und der Rolle) einstellen. Abbildung 1 zeigt eine typische Ausbildung der Warmrisse, die durch Guß des Heizleiterwerkstoffes 1.4767, aber mit 9 % Aluminium, auf eine Stahlrolle erhalten wurde, welche mit grobem Sandpapier aufgerauht worden war. Es ist von besonderem Vorteil, daß dabei sehr dünne Rißränder erzeugt werden.

Nach einer weiteren vorteilhaften Ausführung der Erfindung ist es zur Erhöhung der Temperaturwechselbeständigkeit der Oxidschicht günstig, die Filterkörper vor der Oxidation mit einem aluminiumhaltigen Metallpulver zu beschichten. Als günstig hat es sich herausgestellt, eine Pulvermischung aus Aluminium und Ferroaluminium (etwa je 50 %-Eisen und Aluminium) mit maximalen Korngrößen von ca. 10 % über der Breite der Poren zu verwenden. Das Pulvergemisch wird als Aufschlämmung in üblicher Weise auf den Folienkörper aufgebracht, getrocknet und angesintert. Die Ansinterung erfolgt vorzugsweise im $H_2/N_2$-Schutzgasofen unter Bildung eines metallischen Kontaktes zur Folie und einer Aluminiumnitrid-Schicht auf beiden metallischen Werkstoffen, aus der später mit Sauerstoff oder Luftsauerstoff die Stengeloxide gezüchtet werden. Die häufig als Whisker bezeichneten Stengeloxide und Plättchenoxide ließen sich in eigenen Experimenten auch aus reinem Aluminium, Al-Ce 9 %; Al-Ce 9 % - Zr 2 %; Al-Mg 0,5 % - Si 6 %; Al-Fe 50 % und weiteren aluminiumhaltigen Legierungen durch eine einmalige Oxidation an Luft bei 920 °C züchten, so daß die Whiskerbildung wohl eine natürliche Eigenschaft des Aluminiums darstellt. Die Feinheit der oxidischen Stengelkristalle wird besonders durch den Legierungszusatz von Zirkonium (bis ca. 3 %) verbessert. Die Anwesenheit von Eisenoxid, welches sich bei der Oxidzüchtung aus Ferroaluminium separat und haftfest gleichzeitig in Schalenform bildet, senkt die Entzündungstemperatur des Rußes.

Die zusätzliche Pulverbeschichtung erlaubt es, Poren in der Folie mit Durchmessern bzw. Rißbreiten von wesentlich mehr als ca. 10 $\mu$m zu verwenden. Durch sie wird außerdem die Temperaturwechselbeständigkeit der oxidischen Grundschicht wesentlich erhöht. Offensichtlich wirkt sie als Wärmeisolation und unterstützt die Verklammerung der die Folie abdeckenden Oxidschicht an den Porenrändern sowie der Oxidschicht der übrigen Folienoberfläche. Es kann auch zusätzlich oder ausschließlich mit Aluminiumoxid-Pulver (Wash-Coat) beschichtet werden.

Zur Ausbildung der Stengel-Oxide aus dem Folienwerkstoff ist es notwendig, daß der Werkstoff mehr als ca. 2 % Aluminium aufweist. Der Gehalt ist außerdem notwendig, um einzelne Fehler der abdeckenden Oxidschicht ausheilen zu können. Es sind aber nur Folien mit maximal ca. 5,5 % Aluminium durch Auswalzen herstellbar, so daß zur Züchtung der Stengeloxide nur wenig Aluminium im Basismaterial (z.B. 1.4767 oder 1.4765) vorhanden ist. Höhere Gehalte an Aluminium als 12 % (nach Oxidation) lassen dagegen den Werkstoff verspröden, Gehalte von 6 bis 10 % sind vorteilhaft.

Es wurde nun gefunden, daß man den Aluminiumgehalt der Folie (40-70 $\mu$m) mit Hilfe einer Reibbeschichtung um etwa 2 bis 4 % anheben kann. Dabei wird gleichzeitig ein geeignetes Pulver für die spätere Pulverbeschichtung gewonnen. Die Reibbeschichtung erlaubt es auch, rostfreie Stähle, die kein Aluminium enthalten, im Hochvakuum bei 1200 bis 1300 °C miteinander zu verlöten, so daß Filter auch aus aluminiumfreien Stählen herstellbar sind, indem die Stengeloxide später überwiegend aus dem Beschichtungspulver gezüchtet werden, welches entweder ebenfalls eine deckende Oxidschicht aufweist oder dann vollständig oxidiert ist.

Dagegen ist es für Rußfilter für Dieselmotoren vorteilhafter, von den ferritischen Heizleiterwerkstoffen als Folie auszugehen, mit der Reibbeschichtung den Aluminiumgehalt auf ca. 7,5 bis 9,5 % zu steigern und die Lötung der Folie im Vakuum durchzuführen. Bei Verwendung eines geeigneten Binders in der Aufschlämmung der Pulver und Glühung (Sintern) der Beschichtung, z.B. in reinem Wasserstoff, kann der Aluminiumgehalt der dann zwischenzeitig spröden Folien auch durch das Pulver durch Diffusion noch weiter gesteigert werden, so daß sehr lange Stengel von bis zu ca. 10 $\mu$m Länge und Durchmessern von ca. 0,1 $\mu$m bis 0,2 $\mu$m (bei 900 bis 930 °C, bis zu ca. 24 h) züchtbar sind und trotzdem ein Aluminium-Restgehalt von mehr als 2 % in der Folie bleibt.

Es wurde nun weiterhin gefunden, daß sich durch Guß einer hochaluminiumhaltigen Vorlegierung (9 % Al, 24 % Cr, 0,5 % Zr, 0,6 % Si) auf eine Rolle nach Art der Herstellung amorpher Metalle eine poröse Folie herstellen läßt, die sich trotz des hohen Aluminiumgehaltes mit weiterem Aluminium und 1 % Zirkonium reibbeschichten und wellenförmig prägen sowie zum Wabenkörper durch Löten im Vakuum verbinden ließ. Das Aluminium der Reibbeschichtung diente als Lotanteil. Hieraus ließen sich ebenfalls besonders lange und dünne Stengeloxide züchten, ohne den Mindestgehalt der Folie an Aluminium zu unterschreiten.

Versuche haben nun weiterhin gezeigt, daß die Anwendung der geschilderten Präge- und Wickelmethode nach DE-A-27 59 559 zu einer besonders günstigen Kanalform für Rußfilter führt. Durch die sich abwechselnden Zonen (in Strömungsrichtung) mit alternierendem Druckverlust der Kanäle zwischen zwei Folienlagen wird jeweils ein Teil der Gasströmung durch die Poren der Folien in die Kanäle der Nachbarlagen gedrückt und filtriert. Die Druckverlustzonen treten durch den beim Wickeln zunehmenden Radius von Folienlage zu Folienlage nahezu immer an axial verschiedenen Stellen auf. Es wurden so Abscheideraten von mehr als 90 % des Rußes erhalten, ohne daß die Kanäle abwechselnd verstopft werden mußten. Die Erhöhung der Haftfestigkeit der deckenden Oxidschicht kann auch zusätzlich mit bekannten Methoden, wie dem Zulegieren von ca. 0.04 % Cer oder Yttrium erfolgen. Besonders geeignet hat sich hier eine Kombination herausgestellt:

ca. 0,5 % Titan im z.B. aluminiumfreiem Chromstahl (1.4510) mit einer ca. 1 bis 2 % zirkoniumhaltigen Aluminium-Reibschicht bzw. Reib- und Pulverschicht. Etwa 0,04 bis 1 % Yttrium in der Reib- und Pulver-Aluminiumschicht ist ebenfalls günstig. Um das Beschichtungsaluminium zum größten Teil an der Oberfläche zu halten, damit die Züchtung der Stengeloxide und Plättchenoxide mit möglichst kurzen Ofenzeiten erfolgen kann, ist es vorteilhaft, das Ansintern der Pulverbeschichtung im $N_2/H_2$-Lötofen durchzuführen. Der Stickstoffgehalt führt zur Aluminiumnitridbildung bei bis zu 1100 $^\circ$ C, wobei der Aluminiumpulver-Anteil schon vor der Niridbildung angesintert ist. Aus dem Aluminiumnitrid lassen sich erfindungsgemäß auch Stengeloxide thermisch sowie Plättchenoxide chemisch züchten. Die Ofenzeiten werden auf ca. 12 h statt 20 h (5 $\mu$m lange Stengel) verkürzt, wenn nach Erreichen von 920 $^\circ$ C der Ofen mit reinem Sauerstoff gespült wird.

Eine Behandlung von aluminiumbeschichteten und auch aluminiumnitridbeschichteten Folien mit einer wäßrigen Lösung von 50 g Natriumcarbonat/l und 15 g Natriumchromat/l führt bei 90 $^\circ$ C mit ca. 10 Minuten Tauchzeit (MBV-Verfahren) mit einer anschließenden Wasserabspaltung bei höheren Temperaturen (550 $^\circ$ C) zur Ausbildung einer Plättchenoxidschicht, wobei Zwischenräume der Plättchen in Abständen von ca. 0,2 $\mu$m ebenfalls zur Filtrierung geeignet sind.

In der Zeichnung zeigen

Fig. 1 eine Raster-Elektronenmikroskop-Aufnahme einer porös gegossenen Folie (Warmriß) mit einer Zusammensetzung: 9 % Al, 0,5 % Zr, 0,03 % Ce, 22 % Cr, 0,5 % Si, Rest Eisen sowie üblichen Begleitelementen;

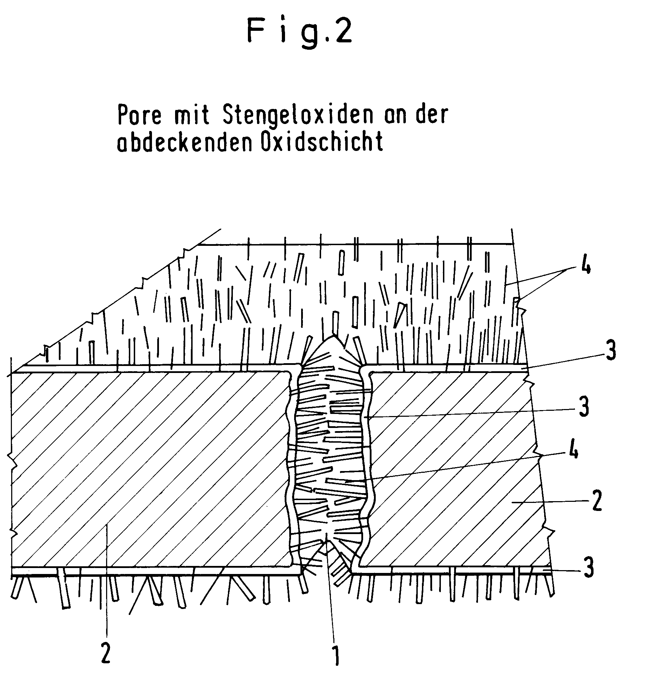

Fig. 2 den Querschnitt eines Abschnitts der Folie 2 mit einer Pore 1, die sie abdeckende Oxidschicht 3 mit den darauf haftenden Stengeloxiden 4;

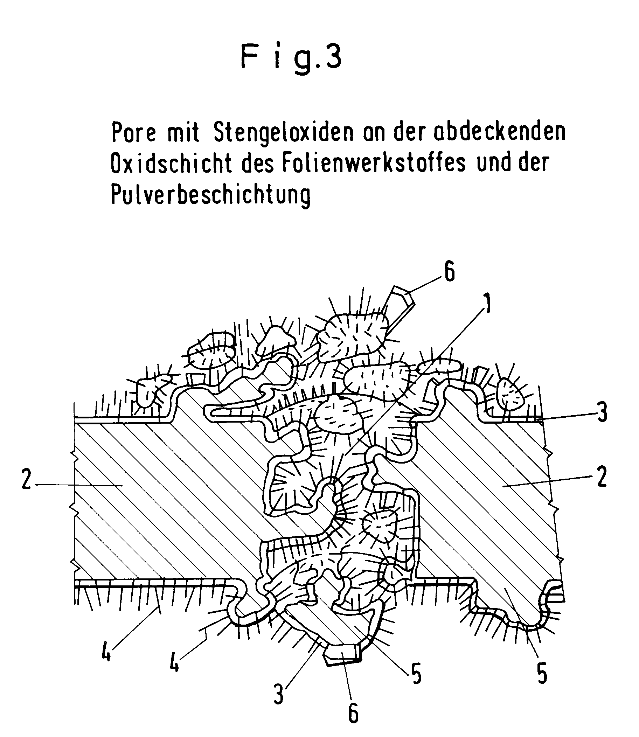

Fig. 3 den Querschnitt eines Folienschnitts mit einer Pore 1, die sie und die Pulverbeschichtung 5 abdeckende Oxidschicht 3 und die darauf haftenden Stengel 4 und Plattenoxide 6;

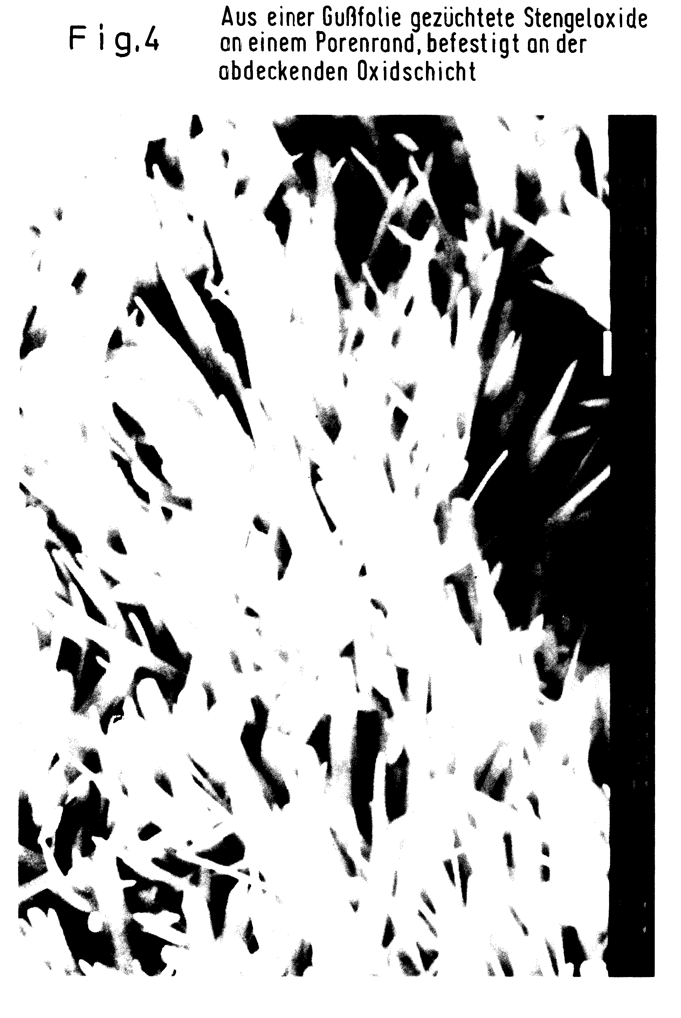

Fig. 4 Stengeloxide an einem Porenrand in einer Vergrößerung

Ausführungsbeispiel

Eine 40 $\mu$m dicke Folie aus einem Stahl, Werkstoff-Nr. 1.4510, wurde mit Hilfe eines verzahnten Prägewalzpaares mit pfeilförmigen Wellen (6 $^\circ$ C Verzahnungswinkel, Wellenhöhe 1 mm, Flankenwinkel 15 $^\circ$, Teilung 2 mm) geprägt. Die Folie wurde dann mit einer 1 % Zirkonium enthaltenden Aluminiumlegierung beidseitig durch Aufreiben 2 um dick beschichtet. Anschließend wurden Reihen von etwa 3 mm langen Einschnitten in Abständen von etwa 1 mm vorgenommen und die Folie dann durch Wickeln zu einem zylinderischen Körper geformt. Der Wickelkörper wurde mit Molybdändraht zusammengehalten und so bei 1280 $^\circ$ C im Hochvakuum durch Löten mit der Aluminiumbeschichtung als wesentlichen Lotanteil in sich fest verbunden.

Nach dem Entfernen der Molybdändrähte wurde der Körper in einer Aufschlämmung auf Basis eines organischen Binders und organischen Lösungsmittels für den Binder von 60 g Aluminiumpulver/l (gleich oder kleiner 20 um) und 100 g Ferroaluminiumpulver/l (gleich oder kleiner 60 um) beschichtet, der mit 30 g/l-Feststoff beschichtete Körper getrocknet und das Pulver im $H_2/N_2$-Schutzgas bis 1050 $^\circ$ C angesintert (Taupunkt -40 $^\circ$ C). Anschließend wurden durch 12-stündiges Glühen bei 920 $^\circ$ C an Luft auf dem beschichteten Folienwerkstoff 5 um lange Stengel überwiegend aus Aluminiumoxid und/oder Plättchen überwiegend aus Eisenoxid im Abstand von unter 1 um gezüchtet.

**Patentansprüche**

1. Filterkörper zum Ausfiltrieren von Feststoffpartikeln mit Durchmessern überwiegend kleiner als 5 $\mu$m aus strömenden Fluiden, der Poren (1) aufweist, dadurch gekennzeichnet, daß der Filterkörper von mindestens einer Stahlfolie (2) gebildet ist, die mit einer stengel- und/oder plättchenförmige Oxide (4, 6) enthaltenden oxidischen Deckschicht (3) versehen ist, wobei an der Oberfläche zumindest in und um die Poren die stengel- und/oder plättchenförmige Oxide angeordnet sind.

2. Verfahren zur Herstellung von Material für Filterkörper nach Anspruch 1, dadurch gekennzeichnet, daß auf einer porösen Stahlfolie eine stengel- und/oder plättchenförmige Oxide zum mindesten in und um die Poren enthaltende oxidische Deckschicht gebildet wird.

3. Verfahren nach Anspruch 2, dadurch gekennzeichnet, daß die Poren der Stahlfolie durch eine Vielzahl von Einschnitten hergestellt werden.

4. Verfahren nach Anspruch 2, dadurch gekennzeichnet, daß die Poren bei der Folienherstellung durch Gießen auf eine Rolle oder zwischen zwei Rollen nach der Art der Herstellung amorpher Metalle hergestellt werden.

5. Verfahren nach Anspruch 2, dadurch gekennzeichnet, daß die Poren bei der Folienherstellung durch Guß auf eine oder zwischen zwei aufgerauhten Rollen in Form von Warmrissen hergestellt werden.

6. Verfahren nach einem der Ansprüche 2 bis 5, dadurch gekennzeichnet, daß auf die poröse Stahlfolie eine Aluminium-Reibbeschichtung und darauf eine aluminiumhaltige Metallpulverbeschichtung aufgebracht wird und beim anschließenden Glühen aus der Metallpulverbeschichtung wie auch aus dem Folienwerkstoff eine Oxidschicht gebildet wird, aus der Aluminiumoxidstengel und/oder -plättchen gezüchtet werden.

7. Verfahren nach Anspruch 6, dadurch gekennzeichnet, daß für die Beschichtung ein Gemisch aus Aluminiumpulver mit einer Korngröße gleich oder kleiner 60 $\mu$m und Ferroaluminium- und/oder Eisenpulver eine Korngröße von gleich oder kleiner als 100 $\mu$m verwendet wird.

8. Verfahren nach Anspruch 6 oder 7, dadurch gekennzeichnet, daß das Metallpulver unter Schutzgas angesintert wird.

9. Verfahren nach einem der Ansprüche 2 bis 8, dadurch gekennzeichnet, daß die Oxidstengel- und/oder -plättchen durch chemische und/oder thermische Oxidation erzeugt werden.

10. Verfahren nach einem der Ansprüche 2 bis 9, dadurch gekennzeichnet, daß eine 12 bis 30 % Chrom enthaltende kohlenstoffarme Stahlfolie verwendet wird.

11. Verfahren nach Anspruch 10, dadurch gekennzeichnet, daß eine aus 12 bis 30 % Chrom, bis 12 % Aluminium, 0,001 bis 0,7% insgesamt an Titan, Zirkonium, Yttrium, eine oder mehrere der Seltenen Erden, einzeln oder zu mehreren, Rest Eisen bestehende Stahlfolie verwendet wird.

**Claims**

1. Filter body, having pores (1), for filtering solids particles having diameters predominantly smaller than 5 $\mu$m out of flowing fluids, characterised in that the filter body is formed by at least one steel foil (2), which is provided with an oxidic cover layer (3) containing columnar and/or platelet-shaped oxides (4,6), the columnar and/or platelet-shaped oxides being located on the surface at least in and around the pores.

2. Process for producing material for filter bodies according to Claim 1, characterised in that an oxidic cover layer containing columnar and/or platelet-shaped oxides at least in and around the pores is formed on a porous steel foil.

3. Process according to Claim 2, characterised in that the pores of the steel foil are produced by a multiplicity of incisions.

4. Process according to Claim 2, characterised in that, during foil production, the pores are produced by casting onto a roll or between two rolls in the manner of the production of amorphous metals.

5. Process according to Claim 2, characterised in that, during foil production, the pores are produced by casting onto a roll or between two rolls roughened in the form of heat cracks.

6. Process according to one of Claims 2 to 5, characterised in that an aluminium friction coating and, on top thereof, an aluminium-containing metal powder coating are applied to the porous steel foil and, on subsequent annealing, an oxide layer is formed from the metal powder coating and also from the foil material, from which oxide layer alumina columns and/or platelets are grown.

7. Process according to Claim 6, characterised in that a mixture of aluminium powder of a grain size equal to or smaller than 60 $\mu$m and of ferroaluminium powder and/or iron powder of a grain size equal to or less than 100 $\mu$m is used for the coating.

8. Process according to Claim 6 or 7, characterised in that the metal powder is sintered on under a blanketing gas.

**9.** Process according to one of Claims 2 to 8, characterised in that the oxide columns and/or oxide platelets are produced by chemical and/or thermal oxidation.

**10.** Process according to one of Claims 2 to 9, characterised in that a low-carbon steel foil containing 12 to 30% of chromium is used.

**11.** Process according to Claim 10, characterised in that a steel foil is used which consists of 12 to 30% of chromium, up to 12% of aluminium and a total of 0.001 to 0.7% of titanium, zirconium, yttrium and one or more of the rare earths, singly or several thereof, the remainder being iron.

**Revendications**

**1.** Corps de filtre pour le filtrage de particules solides d'un diamètre essentiellement inférieur à 5 $\mu$m, dans des fluides en écoulement, lequel corps de filtre présente des pores (1), caractérisé en ce que le corps de filtre est formé d'au moins une feuille d'acier (2) pourvue d'une couche de revêtement (3) oxydée contenant des oxydes (4,6) basaltiques ou en paillettes, ces oxydes étant placés au moins à la surface dans et autour des pores.

**2.** Procédé pour la fabrication de matériau pour le corps de filtre selon la revendication 1, caractérisé en ce que, sur une feuille d'acier poreuse est formée une couche de revêtement oxydée contenant des oxydes basaltiques ou en paillettes au moins dans et autour des pores.

**3.** Procédé selon la revendication 2, caractérisé en ce que les pores de la feuille d'acier sont constitués par une multitude de coupures.

**4.** Procédé selon la revendication 2, caractérisé en ce que les pores sont obtenus lors de la fabrication des feuilles par coulée sur un rouleau ou entre deux rouleaux selon le mode de fabrication des métaux amorphes.

**5.** Procédé selon la revendication 2, caractérisé en ce que les pores sont obtenus sous forme de fissures à chaud, lors de la fabrication des feuilles par coulage sur un rouleau ou entre deux rouleaux rugueux.

**6.** Procédé selon l'une des revendications 2 à 5, caractérisé en ce que sur la feuille d'acier poreuse est mise en place un dépôt par friction d'aluminium et par-dessus une enduction de poudre métallique contenant de l'aluminium et que, lors du recuit qui suit, se forme aussi bien à partir de l'enduction de poudre métallique que de la feuille de matériau une couche d'oxyde, de laquelle sont issues des tiges ou des paillettes d'oxyde d'aluminium.

**7.** Procédé selon la revendication 6, caractérisé en ce que l'on utilise pour l'enduction un mélange de poudre fine d'aluminium, dont la grosseur de grain est inférieure ou égale à 60 $\mu$m et de poudre de ferro-aluminium et/ou de fer d'une grosseur de grain inférieure ou égale à 100 $\mu$m.

**8.** Procédé selon la revendication 6 ou 7, caractérisé en ce que la poudre métallique est frittée sous gaz de protection.

**9.** Procédé selon l'une des revendications 2 à 8, caractérisé en ce que les tiges et/ou les paillettes d'oxyde sont créées par oxydation chimique ou thermique.

**10.** Procédé selon l'une des revendications 2 à 9, caractérisé en ce que l'on utilise une feuille d'acier à bas carbone comportant 12 à 30 % de chrome.

**11.** Procédé selon la revendication 10, caractérisé en ce que l'on utilise une feuille d'acier constituée de 12 à 30 % de chrome, jusqu'à 12 % d'aluminium, 0,001 à 0,7 % d'un total constitué d'un ou plusieurs métaux pris parmi le titane, le zirconium, l'yttrium et une ou plusieurs terres rares, et de fer pour le reste.

# F i g.1
## Gußfolie mit Warmrissen

# F i g.2

Pore mit Stengeloxiden an der
abdeckenden Oxidschicht

# F i g.3

Pore mit Stengeloxiden an der abdeckenden
Oxidschicht des Folienwerkstoffes und der
Pulverbeschichtung

F i g. 4    Aus einer Gußfolie gezüchtete Stengeloxide
an einem Porenrand, befestigt an der
abdeckenden Oxidschicht